(19) Europäisches Patentamt

European Patent Office

Office européen des brevets

(11) **EP 0 982 600 A2**

(12) **EUROPÄISCHE PATENTANMELDUNG**

(43) Veröffentlichungstag:
**01.03.2000 Patentblatt 2000/09**

(51) Int. Cl.⁷: **G01S 3/786**, G01S 3/784

(21) Anmeldenummer: **99115191.1**

(22) Anmeldetag: **16.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **25.08.1998 DE 19838460**

(71) Anmelder: **DaimlerChrysler AG
70567 Stuttgart (DE)**

(72) Erfinder: **Rieger, Rolf, Dr.
85560 Ebersberg (DE)**

(54) **Einrichtung zur Bestimmung des Einfallwinkels einer Lichtquelle, insbesondere der Sonne**

(57) Es wird eine Einrichtung zur Bestimmung des Einfallswinkels (α) einer Lichtquelle, insbesondere der Sonne beschrieben, welche eine Anordnung von lichtempfindlichen Elementen (10, 11, 12) und eine vor den lichtempfindlichen Elementen (10, 11, 12) angeordnete Schattenmaske (15) umfaßt. Ein transparenter Bereich (14) und ein nichttransparenter Bereich (13) der Schattenmaske (15) sind durch eine lineare Grenze (16) voneinander getrennt, die vor dem Zentrum der Anordnung der lichtempfindlichen Elemente (10, 11, 12) und im rechten Winkel zu diesen verläuft. Die Bestimmung des Einfallswinkels (α) der Lichtquelle erfolgt durch Bestimmung der Anzahl der vom nichttransparenten Bereich (14) der Schattenmaske (15) vollständig abgeschatteten lichtempfindlichen Elemente (10) (Grobbestimmung) und durch Bestimmung des Bruchteils der Abschattung des auf die vollständig abgeschatteten lichtempfindlichen Elemente (10) folgenden teilweise abgeschatteten lichtempfindlichen Elements (11) (Feinbestimmung). Die erfindungsgemäße Einrichtung verbindet die Vorteile eines einfachen und zuverlässigen Aufbaus mit hoher Genauigkeit. Es werden Ausführungsbeispiele zur Bestimmung des Einfallswinkels in einer Richtung (α) und in zwei Richtungen (α, β) beschrieben.

Fig.1

EP 0 982 600 A2

**Beschreibung**

Die Erfindung betrifft eine Einrichtung zur Bestimmung des Einfallswinkels einer Lichtquelle, insbesondere der Sonne, also insbesondere einen Sonnensensor.

Ein derartiger Sonnensensor wird unter anderem zur Ausrichtung von Satelliten oder von deren Solargeneratoren in Bezug auf die Sonne verwendet. Gemäß einem Grundprinzip einer Art von derartigen Sonnensensoren ist eine Anordnung einer Anzahl von lichtempfindlichen Elementen, d.h. eines photoempfindlichen Detektorarrays, und eine im Strahlengang der Lichtquelle, d.h. der Sonne, in einem Abstand vor den lichtempfindlichen Elementen angeordnete Schattenmaske mit einem transparenten Bereich und einem nichttransparenten Bereich vorgesehen. Die lichtempfindlichen Elemente werden in Abhängigkeit vom Einfallswinkel der Lichtquelle durch die Schattenmaske abgeschattet und unter Auswertung der von den lichtempfindlichen Elementen erhaltenen Ausgangssignale wird ein dem Einfallswinkel der Lichtquelle entsprechendes Ausgangssignal erzeugt.

Beispielsweise arbeiten bekannte Sonnensensoren mit einer in der Schattenmaske vorgesehenen Schlitzblende, welche durch das näherungsweise parallele Sonnenlicht auf das Photodetektorarray abgebildet wird, wobei sich je nach dem Sonneneinfallswinkel die Position der Abbildung der Schlitzblende und damit der geometrische Ort des erzeugten Photostroms verändert.

Aus der US 4 999 483 ist ein Sonnensensor bekannt, bei dem das Photodetektorarray eine Anzahl von in einer ersten Richtung aufeinanderfolgenden, eine lineare Anordnung bildenden liehtempfindlichen Elementen aufweist. Eine in einem Abstand vor der Anordnung von lichtempfindlichen Elementen angeordnete Schattenmaske enthält eine Aussparung in Form eines Dreiecks, dessen eine Seite senkrecht zur Richtung der Ausdehnung der Anordnung von lichtempfindlichen Elementen verläuft, während eine andere Seite des Dreiecks schräg dazu ausgerichtet ist. Die dritte Seite des Dreiecks verbindet die beiden genannten Seiten in einer Richtung parallel zur Richtung der Ausdehnung des Photodetektorarrays. Das durch die dreieckige Aussparung einfallende Sonnenlicht beleuchtet mehrere der lichtempfindlichen Elemente, deren Lage den Einfallswinkel des Sonnenlichts parallel zur Richtung des Photodetektorarrays angibt, und deren Anzahl den Einfallswinkel des Sonnenlichts in Richtung quer zu den Photodetektorarray angibt.

Aus der US 5 264 691 ist ein Photosensor bekannt, der eine Anordnung von vier quadratischen lichtempfindlichen Elementen gleicher Größe und eine im Strahlengang der Lichtquelle in einem Abstand vor den lichtempfindlichen Elementen angeordnete Schattenmaske aufweist. Die Schattenmaske verfügt über einen quadratischen Ausschnitt, dessen Seiten jeweils parallel zu den Seiten der Anordnung der lichtempfindlichen Elemente verlaufend angeordnet sind, so daß bei senkrechtem Einfall des Sonnenlichts auf das Photodetektorarray jedes der lichtempfindlichen Elemente einen gleichen Photostrom erzeugt. Bei Änderung des Einfallswinkels des Sonnenlichts verschiebt sich das Bild des Ausschnitts der Schattenmaske auf dem Photodetektorarray, so daß sich die Verhältnisse der Photoströme der einzelnen lichtempfindlichen Elemente zueinander verändern, woraus sich der Einfallswinkel des Sonnenlichts in beiden Richtungen bezüglich des Photodetektorarrays ermitteln läßt.

Die Aufgabe der Erfindung ist es, eine Einrichtung zur Bestimmung des Einfallswinkels einer Lichtquelle, insbesondere der Sonne anzugeben, welche einfach aufgebaut ist und eine hohe Genauigkeit aufweist.

Gemäß einem ersten Aspekt der Erfindung wird die Aufgabe durch eine Einrichtung mit den in Anspruch 1 angegebenen Merkmalen gelöst.

Gemäß einem zweiten Aspekt der Erfindung wird die gestellte Aufgabe durch ein Einrichtung mit den in Anspruch 11 angegebenen Merkmalen gelöst. Vorteilhafte Weiterbildungen der Erfindung sind in den jeweiligen Unteransprüchen angegeben.

Gemäß der Erfindung wird eine Einrichtung zur Bestimmung des Einfallswinkels einer Lichtquelle, insbesondere der Sonne geschaffen, die eine Anordnung einer Anzahl von in einer ersten Richtung aufeinanderfolgenden lichtempfindlichen Elementen und eine im Strahlengang der Lichtquelle in einem Abstand vor den lichtempfindlichen Elementen angeordnete Schattenmaske aufweist. Die Schattenmaske hat einen transparenten Bereich und einen nichttransparenten Bereich. Die lichtempfindlichen Elemente werden in Abhängigkeit vom Einfallswinkel der Lichtquelle durch die Schattenmaske abgeschattet und es wird ein dem Einfallswinkel der Lichtquelle entsprechendes Ausgangssignal erzeugt. Erfindungsgemäß ist es vorgesehen, daß der transparente Bereich und der nichttransparente Bereich der Schattenmaske durch eine lineare, im wesentlichen vor dem Zentrum der Anordnung von lichtempfindlichen Elementen im rechten Winkel zu der ersten Richtung verlaufende Grenze voneinander getrennt sind, wobei die lichtempfindlichen Elemente durch den nichttransparenten Bereich der Schattenmaske bis zu einer durch die den nichttransparenten Bereich und den transparenten Bereich der Schattenmaske trennenden Grenze projizierten Schattengrenze abgeschattet und die übrigen lichtempfindlichen Elemente durch den transparenten Bereich beleuchtet werden. Es sind die Ausgangssignale der lichtempfindlichen Elemente aufnehmende Mittel vorgesehen, um die Anzahl der vom nichttransparenten Bereich der Schattenmaske vollständig abgeschatteten lichtempfindlichen Elemente und den Bruchteil der Abschattung des auf die vollständig abgeschatteten lichtempfindlichen Elemente folgenden teilweise abgeschatteten lichtempfindlichen Elements zu bestimmen. Weiterhin sind Mittel vorgesehen, um aus der Anzahl der vollständig abgeschatteten lichtempfindlichen Elemente und dem Bruchteil der Abschattung des teilweise abgeschatteten lichtempfindlichen Elements den Einfallswinkel der Lichtquelle zu bestimmen.

Ein Vorteil der erfindungsgemäßen Einrichtung ist es, daß sie einen einfachen Aufbau und eine geringe Größe und ein geringes Gewicht aufweist. Ein weiterer Vorteil sind die geringen Kosten mit denen die erfindungsgemäße Einrichtung herstellbar ist. Ein weiterer Vorteil ist eine sehr hohe Zuverlässigkeit der Einrichtung. Insbesondere läßt sich mit der erfindungsgemäßen Einrichtung aufgrund der Bestimmung des Einfallswinkels der Sonne einmal durch die Anzahl der vollständig abgeschatteten lichtempfindlichen Elemente (Grobbestimmung) und zum anderen durch die Bestimmung des Bruchteils der Abschattung des teilweise abgeschatteten lichtempfindlichen Elements (Feinbestimmung) eine sehr hohe Genauigkeit erreichen.

Vorzugsweise sind die lichtempfindlichen Elemente in einer sich in der ersten Richtung erstreckenden linearen Anordnung aufeinanderfolgend angeordnet.

Die lichtempfindlichen Elemente sind vorzugsweise rechtwinklig.

Von besonderem Vorteil ist es, wenn die lichtempfindlichen Elemente in der ersten Richtung unmittelbar aufeinanderfolgend angeordnet sind. Hierdurch läßt sich die höchste Genauigkeit erreichen.

Von besonderem Vorteil ist es, die lichtempfindlichen Elemente durch ein monolitisches Detektorarray zu bilden. Das Detektorarray läßt sich hiermit mit geringem Gewicht und geringer Größe und bei niedrigen Herstellkosten realisieren.

Vorzugsweise beträgt die Anzahl n der lichtempfindlichen Elemente acht oder ein Vielfaches von acht. Hierdurch lassen sich Standartbauteile wie achtfache Multiplexer oder vier-fache Operationsverstärker verwenden.

Gemäß einer Weiterbildung der erfindungsgemäßen Einrichtung sind zwei parallel nebeneinanderliegende Anordnungen von jeweils in der ersten Richtung aufeinanderfolgenden lichtempfindlichen Elementen vorgesehen, deren Ausgangssignale unabhängig voneinander verarbeitet werden. Hierdurch läßt sich eine redundant arbeitende Einrichtung realisieren, was besonders beim Einsatz in Raumfahrtzeugen vorteilhaft ist.

Gemäß einer anderen Weiterbildung der erfindungsgemäßen Einrichtung ist vorgesehen, daß in zwei aufeinander senkrecht verlaufenden Richtungen orientierte Anordnungen von lichtempfindlichen Elementen mit jeweils einer Schattenmaske mit im rechten Winkel dazu verlaufender Grenze zwischen dem transparenten Bereich und dem nichttransparenten Bereich zur Bestimmung des Einfallswinkels der Lichtquelle in zwei senkrecht zueinander verlaufenden Richtungen vorgesehen sind. Die erfindungsgemäße Einrichtung gestattet somit die Bestimmung des Einfallswinkels des Lichts in der zur Richtung der ersten Anordnung von lichtempfindlichen Elementen parallelen Richtung und zur Bestimmung des Einfallswinkels des Lichts in der Richtung der zweiten Anordnung von lichtempfindlichen Elementen.

Vorzugsweise sind Mittel vorgesehen, um zur Bestimmung des Bruchteils der Abschattung des teilweise abgeschatteten lichtempfindlichen Elements die Ausgangssignale eines benachbarten vollständig beleuchteten lichtempfindlichen Elements und eines benachbarten vollständig abgeschatteten lichtempfindlichen Elements aufzunehmen.

Weiterhin ist es von Vorteil, Mittel vorzusehen, um auf der Grundlage des Ausgangssignals eines benachbarten vollständig abgeschatteten lichtempfindlichen Elements eine Dunkelstromkorrektur für das teilweise abgeschattete lichtempfindliche Eilement durchzuführen.

Gemäß einem zweiten Aspekt der Erfindung wird eine Einrichtung zur Bestimmung des Einfallswinkels einer Lichtquelle, insbesondere der Sonne, geschaffen, die eine Anordnung einer Anzahl von in einer ersten Richtung und einer zweiten Richtung angeordneten lichtempfindlichen Elementen und eine im Strahlengang der Lichtquelle in einem Abstand vor den lichtempfindlichen Elementen angeordnete Schattenmaske aufweist. Die Schattenmaske verfügt über einen transparenten Bereich und einen nichttransparenten Bereich. Die lichtempfindlichen Elemente werden in Abhängigkeit vom Einfallswinkel der Lichtquelle durch die Schattenmaske abgeschattet und es wird ein dem Einfallswinkel der Lichtquelle entsprechendes Ausgangssignal erzeugt. Erfindungsgemäß ist es vorgesehen, daß der transparente Bereich und der nichttransparente Bereich der Schattenmaske durch zwei lineare, im wesentlichen vor dem Zentrum der Anordnung von lichtempfindlichen Elementen zueinander im rechten Winkel und im rechten Winkel zu der ersten bzw. der zweiten Richtung verlaufende Grenzen getrennt sind, wobei jeweils abwechselnd transparente und nichttransparente Quadrantenbereiche gebildet werden. Die lichtempfindlichen Elemente werden durch die nichttransparenten Bereiche der Schattenmaske bis zu durch die die nichttransparenten Bereiche und die transparenten Bereiche trennenden Grenzen projizierten Schattengrenzen abgeschattet und die übrigen lichtempfindlichen Elemente werden durch die transparenten Bereiche beleuchtet. Es sind die Ausgangssignale der lichtempfindlichen Elemente aufnehmende Mittel vorgesehen, um die Anzahl und Lage der von den nichttransparenten Bereichen der Schattenmaske vollständig abgeschatteten lichtempfindlichen Elemente und den Bruchteil der Abschattung und die Lage der auf die vollständig abgeschatteten lichtempfindlichen Elemente folgenden teilweise abgeschatteten lichtempfindlichen Elemente zu bestimmen. Weiterhin sind Mittel vorgesehen, um aus der Anzahl und Lage der vollständig abgeschatteten lichtempfindlichen Elemente und dem Bruchteil der Abschattung und der Lage der teilweise abgeschatteten lichtempfindlichen Elemente den Einfallswinkel der Lichtquelle zu bestimmen.

Ein wesentlicher Vorteil der hierdurch geschaffenen erfindungsgemäßen Einrichtung ist es, daß mit einem einzigen Photodetektorarray eine Bestimmung des Einfallswinkels in zwei zueinander senkrechten Richtungen möglich ist, wobei diese Bestimmung mit hoher Genauigkeit möglich ist. Diese hohe Genauigkeit läßt sich dadurch erreichen, daß die Bestimmung des Einfallswinkels in jeder der Richtungen einmal aufgrund der Anzahl der vollständig abgeschatteten lichtempfindlichen Elemente (Grobbestimmung) und zum anderen durch die Bestimmung des Bruchteils der teilweise abgeschatteten lichtempfindlichen Elemente (Feinbestimmung) erfolgt.

Vorzugsweise sind die lichtempfindlichen Elemente in einer sich in der ersten und der zweiten Richtung erstreckenden ebenen Anordnung vorgesehen.

Vorzugsweise sind die lichtempfindlichen Elemente rechteckig, insbesondere quadratisch.

Vorzugsweise sind die lichtempfindlichen Elemente in der ersten Richtung und/oder der zweiten Richtung unmittelbar aufeinanderfolgend angeordnet.

Gemäß einer besonders vorteilhaften Ausführungsform der Erfindung sind die lichtempfindlichen Elemente durch ein monolitisches Detektorarray gebildet.

Die Anzahl m, n der lichtempfindlichen Elemente in der ersten Richtung und der zweiten Richtung beträgt vorzugsweise jeweils acht oder ein Vielfaches von acht.

Gemäß einer vorteilhaften Ausgestaltung der Erfindung sind Mittel vorgesehen, um zur Bestimmung des Bruchteils der Abschattung der teilweise abgeschatteten lichtempfindlichen Elemente die Ausgangssignale eines oder mehrerer benachbarter vollständig beleuchteter lichtempfindlicher Elemente und eines oder mehrerer benachbarter vollständig abgeschatteter lichtempfindlicher Elemente aufzunehmen.

Schließlich ist es von Vorteil, Mittel vorzusehen, um auf der Grundlage der Ausgangssignale der benachbarten vollständig abgeschatteten lichtempfindlichen Elemente eine Dunkelstromkorrektur für die teilweise abgeschatteten lichtempfindlichen Elemente durchzuführen.

Im folgenden werden zwei Ausführungsbeispiele der Erfindung anhand der Zeichnung erläutert. Es zeigen:

Figur 1 eine schematisierte perspektivische Darstellung einer Einrichtung zur Bestimmung des Einfallswinkels einer Lichtquelle, nämlich eines Sonnensensors, gemäß einem ersten Ausführungsbeispiel der Erfindung;

Figur 2a) und 2b) seitliche Querschnittsdarstellungen des in Figur 1 gezeigten Sonnensensors für senkrechten Lichteinfall, Figur 2a), bzw. für Lichteinfall unter einem Winkel, Figur 2b); und

Figur 3 eine Draufsicht auf eine Einrichtung zur Bestimmung des Einfallswinkels einer Lichtquelle, nämlich eines Sonnensensors, gemäß einem zweiten Ausführungsbeispiel der Erfindung.

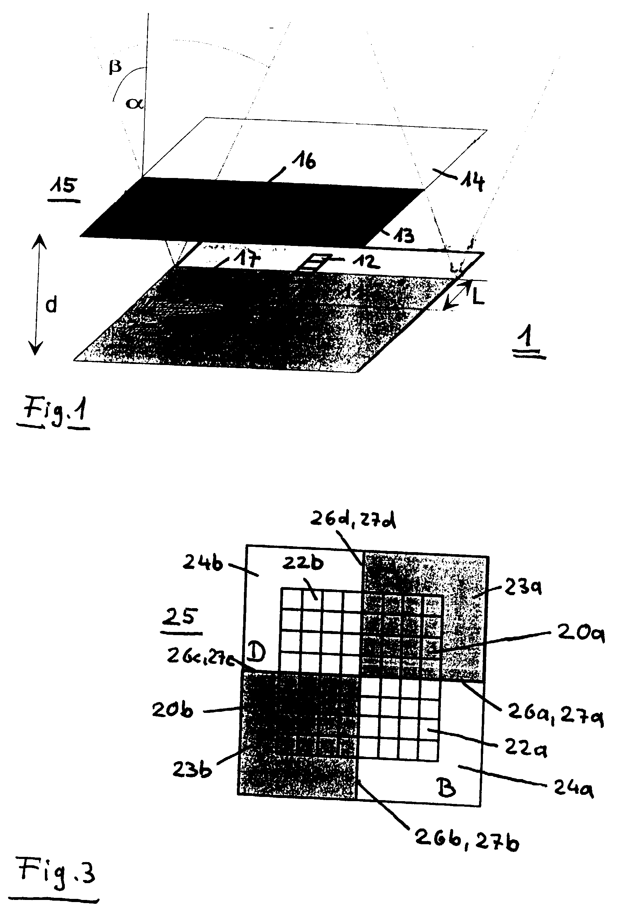

In Figur 1 ist eine Einrichtung zur Bestimmung des Einfallswinkels $\alpha$ einer Lichtquelle, nämlich der Sonne, insgesamt mit dem Bezugszeichen 1 bezeichnet. Der Sonnensensor 1 umfaßt eine Anordnung einer Anzahl von lichtempfindlichen Elementen 10, 11, 12, welche sich in einer ersten Richtung erstrecken und linear aufeinanderfolgend angeordnet sind. Die einzelnen lichtempfindlichen Elemente 10, 11, 12 sind jeweils rechteckig oder quadratisch und unmittelbar aufeinanderfolgend angeordnet und durch ein monolitisches Detektorarray gebildet. Bei dem in Figur 1 dargestellten Ausführungsbeispiel gibt es sechzehn lichtempfindliche Elemente 10, 11, 12. In einem Abstand d vor den lichtempfindlichen Elementen 10, 11, 12 ist eine Schattenmaske 15 angeordnet, welche einen transparenten Bereich 14 und einen nichttransparenten Bereich 13 aufweist. Der transparente Bereich 14 und der nichttransparente Bereich 13 der Schattenmaske sind durch eine lineare Grenze 16 voneinander getrennt, welche vor dem Zentrum der Anordnung der lichtempfindlichen Elemente 10, 11, 12 verläuft und somit die Schattenmaske 15 im wesentlichen in zwei Hälften unterteilt, nämlich den transparenten Bereich 14 und den nichttransparenten Bereich 13. Die lichtempfindlichen Elemente 10, 11, 12 werden in Abhängigkeit vom Einfallswinkel $\alpha$ der Lichtquelle, also der Sonne, durch den nichttransparenten Bereich 13 bis zu einer Schattengrenze 17 abgeschattet, welche der Projektion der den transparenten Bereich 14 vom nichttransparenten Bereich 13 trennenden Grenze 16 entspricht. Die den transparenten Bereich 14 vom nichttransparenten Bereich 13 trennende Grenze 16 verläuft im rechten Winkel zu der ersten Richtung, in welcher sich die Anordnung der lichtempfindlichen Elemente 10, 11, 12 erstreckt.

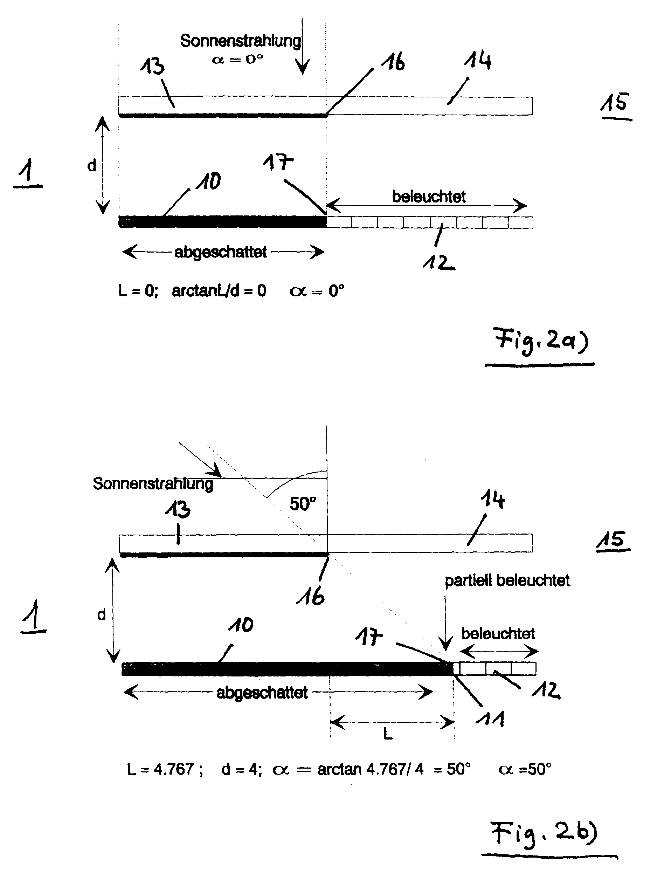

Wie Figur 1 in Verbindung mit den Figuren 2a) und 2b) zeigt, werden die lichtempfindlichen Elemente 10, 11 durch den nichttransparenten Bereich 13 der Schattenmaske 15 bis zu der Schattengrenze 17 abgeschattet, wogegen die übrigen lichtempfindlichen Elemente 12 durch den transparenten Bereich 14 der Schattenmaske 15 beleuchtet werden. Wie Figur 2a) und 2b) zeigen, sind die lichtempfindlichen Elemente 10 vollständig abgeschattet, während ein auf das letzte vollständig abgeschattete lichtempfindliche Element 10 folgendes lichtempfindliches Element 11 teilweise, nämlich bis zu der Schattengrenze 17 abgeschattet ist, Figur 2b).

Bei senkrechtem Lichteinfall, der in Figur 2a) dargestellt ist, das heißt bei einem Einfallswinkel α = 0°, werden die Hälfte der lichtempfindlichen Elemente, nämlich acht lichtempfindliche Elemente 10 von dem nichttransparenten Bereich 13 der Schattenmaske 15 abgeschattet, während die übrigen acht lichtempfindlichen Elemente 12 durch den transparenten Bereich 14 der Schattenmaske 15 beleuchtet werden. Die von der Grenze zwischen dem nichttransparenten Bereich 13 und dem transparenten Bereich 14 projizierte Schattengrenze 17 verläuft genau zwischen den acht vollständig abgeschatteten lichtempfindlichen Elementen 10 und den acht vollständig beleuchteten lichtempfindlichen Elementen 12. In diesem Falle eines idealen genau senkrechten Lichteinfalls gibt es somit kein teilweise beleuchtetes lichtempfindliches Element.

Bei dem in Figur 2b) dargestellten Fall eines schrägen Lichteinfalls, wobei nämlich das Sonnenlicht unter einem Winkel von α = 50° einfällt, werden zwölf lichtempfindliche Elemente 10 von dem nichttransparenten Bereich 13 der Schattenmaske 15 vollständig abgeschattet, drei lichtempfindliche Elemente 12 sind durch den transparenten Bereich 14 der Schattenmaske 15 vollständig beleuchtet. Das lichtempfindliche Element 11 ist bis zu der Schattengrenze 17 teilweise beleuchtet. Die Schattengrenze 17 ist gegen die Mitte der Anordnung von lichtempfindlichen Elementen 10, 11, 12 bzw. der Grenze 16 zwischen dem nichttransparenten Bereich 13 und dem transparenten Bereich 14 der Schattenmaske 15 um eine Strecke L versetzt.

Zur Bestimmung des Einfallswinkels, unter welchem die Sonnenstrahlung auf den Sonnensensor 1 trifft, sind die Ausgangssignale der lichtempfindlichen Elemente 10, 11, 12 aufnehmende Mittel vorgesehen, welche die Anzahl der vom nichttransparenten Bereich 14 der Schattenmaske 15 vollständig abgeschatteten lichtempfindlichen Elemente 10 und den Bruchteil der Abschattung des auf die vollständig abgeschatteten lichtempfindlichen Elemente 10 folgenden teilweise abgeschatteten lichtempfindlichen Elements 11 bestimmen. Weiterhin sind Mittel vorgesehen, um aus der Anzahl der vollständig abgeschatteten lichtempfindlichen Elemente 10 und dem Bruchteil der Abschattung des teilweise abgeschatteten lichtempfindlichen Elements 11 den Einfallswinkel α zu bestimmen, d.h. zu berechnen. Dies bedeutet, daß die Winkelbestimmung in zwei Schritten erfolgt, nämlich einmal durch Bestimmung der Anzahl der vollständig abgeschatteten lichtempfindlichen Elemente 10 (Grobbestimmung), welche quasi digital erfolgt, und eine Bestimmung des Bruchteils der Abschattung des teilweise abgeschatteten lichtempfindlichen Elements 11 (Feinbestimmung), was quasi durch einen analogen Interpolationsschritt vorgenommen wird. Diese Bestimmung erfolgt vorzugsweise durch einen Mikroprozessor, beispielsweise durch einen Einbaurechner eines Raumfahrtzeuges, wie etwa eines Satelliten. Die Entfernung L der Schattengrenze 17 von der Mitte der Anordnung von lichtempfindlichen Elementen 10, 11, 12, d.h. des Detektorarrays läßt sich bestimmen als

$$L = (n_s - n/2 + 1 - A_s/A_v) \times l \qquad (1)$$

wobei

$n_s$ = Gesamtzahl der vollständig abgeschatteten lichtempfindlichen Elemente 10
$n$ = Zahl aller lichtempfindlichen Elemente 10, 11, 12
$A_s$ = Ausgangssignal des teilweise abgeschatteten lichtempfindlichen Elements 11
$A_v$ = Ausgangssignal eines benachbarten vollständig beleuchteten lichtempfindlichen Elements 12
$l$ = Länge eines lichtempfindlichen Elements in Längsrichtung.

Der Einfallswinkel α der Sonnenstrahlung ergibt sich dann auf einfache Weise zu

$$\alpha = \arctan L/d \qquad (2)$$

um eine hohe Genauigkeit des bestimmten Winkels zu erhalten ist die Erfüllung zweier Voraussetzungen wichtig, nämlich daß der Photostrom pro Lichtleistung/Fläche der lichtempfindlichen Elemente 10, 11, 12 ortsunabhängig gleich groß ist, und zum anderen, daß der Photostrom der lichtempfindlichen Elemente 10, 11, 12 proportional zur absorbierten Lichtleistung bzw. Strahlungsleistung ist.

Bei dem in Figur 2a) gezeigten Beispiel steht die Sonne genau in Richtung der Normalen, also senkrecht zum Photosensor 1 unter einem Winkel α = 0°. Es werden somit acht lichtempfindliche Elemente 10 vollständig abgeschattet, die anderen acht lichtempfindlichen Elemente 12 werden mit der maximalen Intensität $A_0$ beleuchtet. Ändert sich der Sonnenstand unter einem Winkel β parallel zu der den nichttransparenten Bereich 13 vom transparenten Bereich 14 der Schattenmaske 15 trennenden Grenze 16, also senkrecht zu der ersten Richtung, in welcher sich die Anordnung von lichtempfindlichen Elementen 10, 11, 12 erstreckt, so ergibt sich für die Intensität der vollbeleuchteten lichtempfindlichen Elemente 12 $A_v = A_0 \times \cos \beta$. Das heißt, der Sonnensensor 1 ist nicht empfindlich für eine Bestimmung des Einfallswinkels β.

Bei dem in Figur 2b) gezeigten Beispiel fällt die Sonnenstrahlung unter einem Winkel α = 50° bezogen auf die erste Richtung, in welcher sich die Anordnung von lichtempfindlichen Elementen 10, 11, 12 erstreckt, auf den Sonnensensor 1, so daß nun gegenüber dem Fall des senkrechten Einfalls der Sonnenstrahlung von Figur 2a) nun weitere vier lichtempfindliche Elemente 10 vollständig abgeschattet werden, das folgende lichtempfindliche Element 11 teilweise abgeschattet wird, während nur noch drei lichtempfindliche Elemente 12 vollständig beleuchtet werden, wobei die Intensität der Strahlung auf den vollständig beleuchteten lichtempfindlichen Elementen 12 $A_v = A_0 \times \cos 50°$, unter der Voraussetzung, daß $\beta = 0$. Das teilweise beleuchtete lichtempfindliche Element 11 liefert ein Signal von $A_s = 0,767 \times A_0 \times \cos 50°$. Die Anwendung von Formel (1) liefert daraus $\alpha = 50°$ Bei einer Änderung des Einfallswinkels der Sonnenstrahlung in der unempfindlichen Richtung $\beta$ bleibt das Verhältnis $A_s/A_v$ und damit der errechnete Einfallswinkel $\alpha$ erhalten.

Die Bestimmung des Bruchteils der Abschattung $A_s/A_v$ des teilweise abgeschatteten lichtempfindlichen Elements 11 erfolgt unter Verwendung der Ausgangssignale eines benachbarten vollständig beleuchteten lichtempfindlichen Elements 12 und eines benachbarten vollständig abgeschatteten lichtempfindlichen Elements 10. Die Genauigkeit des erhaltenen Ergebnisses für den Bruchteil der Abschattung $A_s/A_v$ für das teilweise abgeschattet lichtempfindliche Element wird erhöht bei Durchführung einer Dunkelstromkorrektur auf der Grundlage des Ausgangssignals des benachbarten vollständig abgeschatteten lichtempfindlichen Elements 10.

Figur 3 zeigt eine Draufsicht auf einen insgesamt mit dem Bezugzeichen 2 versehenen Sonnensensor, welcher der Bestimmung des Einfallswinkels der Sonnenstrahlung in beiden Richtungen $\alpha$, $\beta$ dient. Hierzu ist eine Anordnung einer Anzahl von lichtempfindlichen Elementen 20a, b, 22a, b vorgesehen, welche sich in einer ersten Richtung und einer zweiten Richtung erstrecken. Die lichtempfindlichen Elemente 20a, b, 22a, b sind jeweils rechteckig, insbesondere quadratisch und in der ersten Richtung und der zweiten Richtung unmittelbar aufeinanderfolgend angeordnet und durch ein monolitisches Detektorarray gebildet. In einem Abstand d vor den lichtempfindlichen Elementen 20a, b, 22a, b ist eine Schattenmaske 25 angeordnet, die einen transparenten Bereich 24a, b und einen nichttransparenten Bereich 23a, b aufweist. Der transparente Bereich 24a, b und der nichttransparente Bereich 23a, b der Schattenmaske 25 sind durch zwei lineare, vor dem Zentrum der Anordnung der lichtempfindlichen Elemente 20a, b, 22a, b zueinander im rechten Winkel und im rechten Winkel zu der ersten bzw. der zweiten Richtung verlaufende Grenzen 26a, c, 26b, d getrennt, so daß sich jeweils abwechselnd transparente und nichttransparente Quadrantenbereiche A, B, C, D ergeben. Die lichtempfindlichen Elemente 20a, b, 22a, b werden in Abhängigkeit vom Einfallswinkel $\alpha$, $\beta$ der Sonnenstrahlung durch die Schattenmaske 25 abgeschattet und erzeugen ein dem Einfallswinkel $\alpha$, $\beta$ entsprechendes Ausgangssignal. Das heißt, die lichtempfindlichen Elemente 20a, b hinter dem ersten Quadranten A und dem dritten Quadranten C werden durch die nichttransparenten Bereiche 23a, b der Schattenmaske 25 bis zu Schattengrenzen 27a, b, c, d abgeschattet, welche von den die nichttransparenten Bereiche 23a, b und die transparenten Bereiche 24a, b der Schattenmaske 25 trennenden Grenzen 26a, b, c, d projiziert werden. Die übrigen lichtempfindlichen Elemente 22a, b, welche hinter dem zweiten Quadranten B und dem vierten Quadranten D liegen, werden durch die transparenten Bereiche 24a, b der Schattenmaske 25 beleuchtet.

Zur Bestimmung des Einfallswinkels $\alpha$, $\beta$ der Sonnenstrahlung sind die Ausgangssignale der lichtempfindlichen Elemente 20a, b, 22a, b aufnehmende Mittel vorgesehen, welche die Anzahl und Lage der von den nichttransparenten Bereichen 23a, b der Schattenmaske 25 vollständig abgeschatteten lichtempfindlichen Elemente 20a, b und den Bruchteil der Abschattung und die Lage der auf die vollständig abgeschatteten lichtempfindlichen Elemente 20a, b folgenden teilweise abgeschatteten lichtempfindlichen Elemente zu bestimmen. In dem in Figur 3 dargestellten Fall einer Einstrahlung senkrecht auf den Sonnensensor 2 gibt es keine solche teilweise abgeschatteten lichtempfindlichen Elemente. Weiterhin sind Mittel vorgesehen, um aus der Anzahl und Lage der vollständig abgeschatteten lichtempfindlichen Elemente 20a, b und dem Bruchteil der Abschattung und der Lage der teilweise abgeschatteten lichtempfindlichen Elemente den Einfallswinkel $\alpha$, $\beta$ der Sonnenstrahlung zu bestimmen. Diese Bestimmung des Einfallswinkels $\alpha$, $\beta$ erfolgt grundsätzlich in der vorher anhand des ersten Ausführungsbeispiels erläuterten Bestimmung des Einfallswinkels $\alpha$, wobei die Berechnungen jedoch für die beiden Winkel $\alpha$ und $\beta$ vorgenommen werden müssen. Dies macht einen größeren Rechenaufwand erforderlich, ist jedoch in der gleichen Weise durchführbar.

Die Bestimmung des Bruchteils der Abschattung der teilweise abgeschatteten lichtempfindlichen Elemente erfolgt wiederum auf der Grundlage der Ausgangssignale eines (oder mehrerer) der vollständig beleuchteten lichtempfindlichen Elemente 22a, b und eines (oder mehrerer) der vollständig abgeschatteten lichtempfindlichen Elemente 20a, b. Zur Verbesserung der Genauigkeit bei der Bestimmung des Bruchteils der Abschattung der teilweise abgeschatteten lichtempfindlichen Elemente erfolgt wiederum eine Dunkelstromkorrektur auf der Grundlage der Ausgangssignale der vollständig abgeschatteten lichtempfindlichen Elemente 20a, b.

Die Anzahl m, n der lichtempfindlichen Elemente 20a, b, 22a, b in der ersten Richtung und der zweiten Richtung beträgt bei dem dargestellten Ausführungsbeispiel acht, so daß es insgesamt vierundsechzig lichtempfindliche Elemente 20a, b, 22a, b gibt.

## Patentansprüche

1. Einrichtung zur Bestimmung des Einfallswinkels ($\alpha$) einer Lichtquelle, insbesondere der Sonne, mit einer Anordnung einer Anzahl von in einer ersten Richtung aufeinanderfolgenden lichtempfindlichen Elementen (10, 11, 12) und einer im Strahlengang der Lichtwelle in einem Abstand (d) vor den lichtempfindlichen Elementen (10, 11, 12) angeordneten Schattenmaske (15) mit einem transparenten Bereich (14) und einem nichttransparenten Bereich (13), wobei die lichtempfindlichen Elemente (10, 11, 12) in Abhängigkeit vom Einfallswinkel ($\alpha$) der Lichtquelle durch die Schattenmaske (15) abgeschattet werden und ein dem Einfallswinkel ($\alpha$) der Lichtquelle entsprechendes Ausgangssignal erzeugen, dadurch gekennzeichnet, daß der transparente Bereich (14) und der nichttransparente Bereich (13) der Schattenmaske (15) durch eine lineare, im wesentlichen vor dem Zentrum der Anordnung von lichtempfindlichen Elementen (10, 11, 12) im rechten Winkel zu der ersten Richtung verlaufende Grenze (16) voneinander getrennt sind, wobei die lichtempfindlichen Elemente (10, 11, 12) durch den nichttransparenten Bereich (13) der Schattenmaske (15) bis zu einer durch die den nichttransparenten Bereich (13) und den transparenten Bereich (14) der Schattenmaske (15) trennenden Grenze (16) projizierten Schattengrenze (17) abgeschattet und die übrigen lichtempfindlichen Elemente (12) durch den transparenten Bereich (14) beleuchtet werden, und daß die Ausgangssignale der lichtempfindlichen Elemente (10, 11, 12) aufnehmende Mittel vorgesehen sind, um die Anzahl der vom nichttransparenten Bereich (14) der Schattenmaske (15) vollständig abgeschatteten lichtempfindlichen Elemente (10) und den Bruchteil der Abschattung des auf die vollständig abgeschatteten lichtempfindlichen Elemente (10) folgenden teilweise abgeschatteten lichtempfindlichen Elements (11) zu bestimmen, und daß Mittel vorgesehen sind, um aus der Anzahl der vollständig abgeschatteten lichtempfindlichen Elemente (10) und dem Bruchteil der Abschattung des teilweise abgeschatteten lichtempfindlichen Elements (11) den Einfallswinkel ($\alpha$) der Lichtquelle zu bestimmen.

2. Einrichtung nach Anspruch 1, dadurch gekennzeichnet, daß die lichtempfindlichen Elemente (10, 11, 12) in einer sich in der ersten Richtung erstreckenden linearen Anordnung aufeinanderfolgend angeordnet sind.

3. Einrichtung nach Anspruch 1 oder 2, dadurch gekennzeichnet, daß die lichtempfindlichen Elemente (10, 11, 12) rechteckig sind.

4. Einrichtung nach Anspruch 1, 2 oder 3, dadurch gekennzeichnet, daß die lichtempfindlichen Elemente (10, 11, 12) in der ersten Richtung unmittelbar aufeinanderfolgend angeordnet sind.

5. Einrichtung nach einem der Ansprüche 1 bis 4, dadurch gekennzeichnet, daß die lichtempfindlichen Elemente (10, 11, 12) durch ein monolitisches Detektorarray gebildet sind.

6. Einrichtung nach einem der Ansprüche 1 bis 5, dadurch gekennzeichnet, daß die Anzahl n der lichtempfindlichen Elemente (10, 11, 12) acht oder ein Vielfaches von acht beträgt.

7. Einrichtung nach einem der Ansprüche 1 bis 6, dadurch gekennzeichnet, daß zwei parallel nebeneinanderliegende Anordnungen von jeweils in der ersten Richtung aufeinanderfolgenden lichtempfindlichen Elementen (10, 11, 12) vorgesehen sind, deren Ausgangssignale unabhängig voneinander verarbeitet werden.

8. Einrichtung nach einem der Ansprüche 1 bis 7, dadurch gekennzeichnet, daß in zwei aufeinander senkrecht verlaufenden Richtungen orientierte Anordnungen von lichtempfindlichen Elementen (10, 11, 12) mit jeweils einer Schattenmaske (15) mit im rechten Winkel dazu verlaufender Grenze (14) zwischen transparentem Bereich (14) und nichttransparentem Bereich (13) zur Bestimmung der Einfallswinkel ($\alpha$, $\beta$) der Lichtquelle in zwei senkrecht zueinander verlaufenden Richtungen vorgesehen sind.

9. Einrichtung nach einem der Ansprüche 1 bis 8, dadurch gekennzeichnet, daß Mittel vorgesehen sind, um zur Bestimmung des Bruchteils der Abschattung des teilweise abgeschatteten lichtempfindlichen Elements (11) die Ausgangssignale eines benachbarten vollständig beleuchteten lichtempfindlichen Elements (12) und eines benachbarten vollständig abgeschatteten lichtempfindlichen Elements (10) aufzunehmen.

10. Einrichtung nach Anspruch 9, dadurch gekennzeichnet, daß Mittel vorgesehen sind, um auf der Grundlage des Ausgangssignals eines benachbarten vollständig abgeschatteten lichtempfindlichen Elements (10) eine Dunkelstromkorrektur für das teilweise abgeschattete lichtempfindliche Element (11) durchzuführen.

11. Einrichtung zur Bestimmung des Einfallswinkels ($\alpha$, $\beta$) einer Lichtquelle, insbesondere der Sonne, mit einer Anordnung einer Anzahl von in einer ersten Richtung und einer zweiten Richtung angeordneten lichtempfindlichen Elementen (20a, b, 22a, b) und einer im Strahlengang der Lichtquelle in einem Abstand (d) vor den lichtempfindlichen Elementen (20a, b, 22a, b) angeordneten Schattenmaske (25) mit einem transparenten Bereich (24a, b) und einem nichttransparenten Bereich (23a, b), wobei die lichtempfindlichen Elemente (20a, b, 22a, b) in Abhängigkeit vom Einfallswinkel ($\alpha$, $\beta$) der Lichtquelle durch die Schattenmaske (25) abgeschattet werden und ein dem Einfallswinkel (α, β) der Lichtquelle entsprechendes Ausgangssignal erzeugen, dadurch gekennzeichnet, daß der transparente Bereich (24a, b) und der nichttransparente Bereich (23a, b) der Schattenmaske (25) durch zwei lineare, im wesentlichen vor dem Zentrum der Anordnung von lichtempfindlichen Elementen (20a, b, 22a, b) zueinander im rechten Winkel und im rechten Winkel zu der ersten bzw. der zweiten Richtung verlaufende Grenzen (26a, c, 26b, d) unter Bildung von jeweils abwechselnd transparenten und nichttransparenten Quadrantenbereichen (A, B, C, D) voneinander getrennt sind, wobei die lichtempfindlichen Elemente (20a, b) durch die nichttransparenten Bereiche (23a, b) der Schattenmaske (25) bis zu durch die die nichttransparenten Bereiche (23a, b) und die transparenten Bereiche (24a, b) trennenden Grenzen (26a, b, c, d) projizierten Schattengrenzen (27a, b, c, d) abgeschattet und die übrigen lichtempfindlichen Elemente (22a, b) durch die transparenten Bereiche (24a, b) beleuchtet werden und daß die Ausgangssignale der lichtempfindlichen Elemente (20a, b, 22a, b) aufnehmende Mittel vorgesehen sind, um die Anzahl und Lage der von den nichttransparenten Bereichen (23a, b) der Schattenmaske (24) vollständig abgeschatteten lichtempfindlichen Elemente (20a, b) und den Bruchteil der Abschattung und die Lage der auf die vollständig abgeschatteten lichtempfindlichen Elemente (20a, b) folgenden teilweise abgeschatteten lichtempfindlichen Elemente zu bestimmen, und daß Mittel vorgesehen sind, um aus der Anzahl und Lage der vollständig abgeschatteten lichtempfindlichen Elemente (20a, b) und dem Bruchteil der Abschattung und der Lage der teilweise abgeschatteten lichtempfindlichen Elemente den Einfallswinkel (α, β) der Lichtquelle zu bestimmen.

**12.** Einrichtung nach Anspruch 11, dadurch gekennzeichnet, daß die lichtempfindlichen Elemente (20a, b, 22a, b) in einer sich in der ersten und zweiten Richtung erstreckenden ebenen Anordnung vorgesehen sind.

**13.** Einrichtung nach Anspruch 11 oder 12, dadurch gekennzeichnet, daß die lichtempfindlichen Elemente (20a, b, 22a, b) rechteckig, insbesondere quadratisch sind.

**14.** Einrichtung nach Anspruch 11, 12 oder 13, dadurch gekennzeichnet, daß die lichtempfindlichen Elemente (20a, b, 22a, b) in der ersten Richtung und/oder der zweiten Richtung unmittelbar aufeinanderfolgend angeordnet sind.

**15.** Einrichtung nach einem der Ansprüche 1 bis 14, dadurch gekennzeichnet, daß die lichtempfindlichen Elemente (20a, b, 22a, b) durch ein monolitisches Detektorarray gebildet sind.

**16.** Einrichtung nach einem der Ansprüche 11 bis 15, dadurch gekennzeichnet, daß die Anzahl m, n der lichtempfindlichen Elemente (20a, b, 22a, b) in der ersten Richtung und der zweiten Richtung jeweils acht oder ein Vielfaches von acht beträgt.

**17.** Einrichtung nach einem der Ansprüche 11 bis 16, dadurch gekennzeichnet, daß Mittel vorgesehen sind, um zur Bestimmung des Bruchteils der Abschattung der teilweise abgeschatteten lichtempfindlichen Elemente die Ausgangssignale eines oder mehrerer benachbarter vollständig beleuchteter lichtempfindlicher Elemente (22a, b) und eines oder mehrerer benachbarter vollständig abgeschatteter lichtempfindlicher Elemente (20a, b) aufzunehmen.

**18.** Einrichtung nach Anspruch 17, dadurch gekennzeichnet, daß Mittel vorgesehen sind, um auf der Grundlage der Ausgangssignale der benachbarten vollständig abgeschatteten lichtempfindlichen Elemente (20a, b) eine Dunkelstromkorrektur für die teilweise abgeschatteten lichtempfindlichen Elemente durchzuführen.

Fig.1

Fig.3

Sonnenstrahlung
α = 0°

13   16   14

15

1   d   10   17

beleuchtet

abgeschattet

12

L = 0;  arctan L/d = 0   α = 0°

Fig. 2a)

Sonnenstrahlung

50°

13   14

15

1   d   10   17

partiell beleuchtet

beleuchtet

16

abgeschattet

11

12

L

L = 4.767 ;   d = 4;  α = arctan 4.767/ 4  = 50°   α =50°

Fig. 2b)